# EUROPEAN PATENT SPECIFICATION

(11) **EP 1 995 817 B1**
(45) Date of publication and mention of the grant of the patent: **10.08.2016**
(21) Application number: 06834457.1
(22) Date of filing: 11.12.2006
(51) Int. Cl.: H01M 6/16, H01M 10/0567, H01M 10/0568

(54) **LITHIUM RECHARGEABLE BATTERY USING IONIC LIQUID**
WIEDERAUFLADBARE LITHIUMBATTERIE MIT IONISCHER FLÜSSIGKEIT
BATTERIE RECHARGEABLE AU LITHIUM UTILISANT UN LIQUIDE IONIQUE

(30) Priority: 03.02.2006 JP 2006027368
(43) Date of publication of application: 26.11.2008
(73) Proprietor: Dai-Ichi Kogyo Seiyaku Co., Ltd., Kyoto-shi, Kyoto 600-8873 (JP)
(72) Inventor: ISHIKO, Eriko, Kyoto-shi, Kyoto 600-8873 (JP); KIKUTA, Manabu, Kyoto-shi, Kyoto 600-8873 (JP); KONO, Michiyuki, Kyoto-shi, Kyoto 600-8873 (JP)
(74) Representative: Jacob, Reuben Ellis
(86) International application number: PCT/JP2006/324702
(87) International publication number: WO 2007/088677

(56) References cited:
- CA-A1- 2 431 682
- JP-A- 2004 146 346
- JP-A- 2005 183 195
- JP-A- 2005 183 270
- JP-A- 2006 019 070
- JP-A- 2007 035 357
- US-A1- 2004 106 047
- US-A1- 2005 084 763

## Description

### Technical Field

The present invention relates to a lithium secondary battery using an ionic liquid, and more particularly, it relates to a high voltage lithium secondary battery using a nonflammable nonaqueous electrolyte.

### Background Art

A lithium secondary battery has high voltage and high energy density even though it is compact and lightweight. Therefore, the lithium secondary battery is used in power source of terminals of information and communication devices such as mobile phones, laptop computers and digital cameras, and demand is rapidly expanded. Furthermore, it is noted as power source of electric vehicles from the viewpoint of environmental and resource problems.

Conventionally, a polar aprotic organic solvent which is liable to dissolve a lithium salt and is difficult to be electrolyzed has been used as a nonaqueous solvent used in a nonaqueous electrolyte of a lithium secondary battery. Examples of the polar aprotic organic solvent include carbonates such as ethylene carbonate and propylene carbonate; carbonic esters such as dimethyl carbonate, methyl ethyl carbonate and diethyl carbonate; lactones such as γ-butyrolactone and 3-methyl-y-valerolactone; esters such as methyl formate, methyl acetate and methyl propionate; and ethers such as 1,2-dimethoxyethane, tetrahydrofuran and dioxolan. Examples of the lithium salt dissolved include LiPF₆, LiBF₄, LiN (CF₃SO₂)₂, LiClO₄ and LiCF₃SO₃.

Among the above solvents, dimethyl carbonate, 1,2-dimethoxyethane and the like are particularly frequently used. Those solvents have very low flash point, and therefore have great problems on safety of a battery such as flash or explosion due to generation of heat in the case of overcharging or short-circuiting. Particularly, in recent years, development of a high capacity and high output lithium secondary battery is urgently needed, and the problem of safety becomes increasingly an important problem to be solved.

For this reason, various proposals are made to use a nonflammable compound in a nonaqueous electrolyte. For example, using phosphoric esters, esters or specific phosphoric ester compounds (Patent Documents 1 and 2), an electrolyte containing a specific fluorinated ketone in an aprotic solvent (Patent Document 3), and the like are disclosed, but those are not yet sufficiently satisfied.

Furthermore, in a lithium secondary battery using an ionic liquid in place of a nonaqueous solvent, potential window of the ionic liquid used is narrow, and viscosity after dissolving an ionic compound is relatively high. Therefore, the lithium secondary battery using those has the problem on cycle characteristic, and discharge capacity is not almost obtained during discharging (high-rate discharge) in the state of high current density. As a result, the performance as a secondary battery was insufficient. In particular, irreversible reaction is generated electrochemically at a reducing side, and as a result, only a low voltage lithium secondary battery is merely achieved as compared with the conventional electrolyte.

For example, using an ionic liquid containing bis (fluorosulfonyl) imide anion as an anion component is known as the embodiment of using an ionic liquid in a nonaqueous electrolyte (Patent Document 4). The lithium secondary battery illustrated in this patent document uses 4V-level active material (LiCoO₂) in a positive electrode, but uses Li₄Ti₅O₁₂ in a negative electrode. Therefore, the usable voltage region is narrow as 2.8 to 2.0V, and this is disadvantageous in the point of energy density. There is no disclosure to show that 4V-level voltage region is obtained.

Examples of documents describing the background of the invention are provided. CA 2 431 682 is directed to a method for producing an electrolyte wherein imidazolium or pyrrolidinium is used as a cation of the ionic liquid. US 2004/106047 describes a secondary battery using a non-aqueous electrolyte LiFSi dissolved in lactone as a solvent.
Patent Document 1: JP-A-2000-195544
Patent Document 2: JP-A-2001-126726
Patent Document 3: JP-A-2005-276517
Patent Document 4: US patent No. 6,365,301

US 2005/084763 relates to ionic compounds with onium type cations and their use as solvent in electrochemical devices. This document describes an electrochemical stability study measured by cyclic voltametry comparing the conductivity obtained using an EMIFSI salt and an EMITFSI salt.

JP 2006/019070 describes a non-aqueous electrolyte battery, in which the non-aqueous electrolyte comprises an ionic liquid comprising onium cations and non-aluminate-based anions, and a lithium salt, TFSI.

JP 2005/183270 describes a non-aqueous electrolytic solution for a non-aqueous electrolyte secondary battery, in which the solution comprises an alkali salt, a non-aqueous solvent and an ionic liquid with TFSI.

JP 2005/183195 describes a lithium secondary battery, including a non-aqueous electrolytic solution with TFSI.

JP 2004/146346 describes a non-aqueous electrolyte containing an ionic liquid for manufacturing a secondary battery. The electrolyte of specific formula, comprises an ionic liquid having a melting point of 50°C or less, a chemical compound reductively decomposed with an electric potential nobler than that of the ionic liquid, and lithium salt, TFSI.

### Disclosure of the Invention

### Problems that the Invention is to Solve

The present invention has been made in view of the above problems, and has an object to provide a lithium secondary battery having high performance even at the time of high-rate charging and discharging, high energy density, high voltage, and excellent safety due to that a nonflammable ionic liquid is used as a solvent of a nonaqueous electrolyte.

### Means for Solving the Problems

As a result of extensive and intensive investigations to solve the above problems, the present inventors have found that high voltage and high energy density are obtained even in the case of using an ionic liquid containing bis(fluorosulfonyl)imide anion as an anionic component, as a solvent for dissolving a lithium salt as a supporting electrolyte in a lithium ion-conductive nonaqueous electrolyte, and have reached the present invention.

That is, the invention described in claim 1 is a lithium secondary battery using an ionic liquid, comprising a positive electrode, a negative electrode, a separator provided between the positive electrode and the negative electrode, and a nonaqueous electrolyte containing a lithium salt, wherein the nonaqueous electrolyte uses an ionic liquid containing bis(fluorosulfonyl)imide anion as an anionic component, as a solvent. The positive electrode comprises one or more active materials selected from LiMn₂O₄, LiMn_{1/3}Ni_{1/3}Co_{1/3}O₂, LiMn_{1/2}Ni_{1/2}O₂, LiFePO₄ and LiNiO₂. The negative electrode comprises an active material selected from mesocarbon microbead and natural graphite. The amount of halogen ions contained in the nonaqueous electrolyte is 10 ppm or lower.

The invention described in claim 2 is the lithium secondary battery using an ionic liquid as described in claim 1, wherein the ionic liquid contains a cation containing a nitrogen atom as a cationic component.

The invention described in claim 3 is the lithium secondary battery using an ionic liquid as described in claim 2, wherein the cation containing a nitrogen atom is alkyl ammonium, imidazolium, pyrrolidinium or piperidinium.

### Advantage of the invention

According to the lithium secondary battery using an ionic liquid of the present invention, there can be provided a lithium secondary battery which has excellent safety, high performance even at the time of high-rate charging and discharging, high energy density and high capacity, and can obtain 4V-level high voltage.

### Best Mode for Carrying Out the Invention

The embodiment of the present invention is described below.

The lithium secondary battery according to the present invention is constituted of a positive electrode, a negative electrode, a separator provided between the positive electrode and the negative electrode for partitioning those, and a nonaqueous electrolyte comprising a solvent for conducting lithium ions, having dissolved therein a lithium salt as a supporting electrolyte.

The active material of the positive electrode used in the present invention allows the insertion and desorption of lithium ions and is selected from one or more of LiMn₂O₄, LiMn_{1/3}Ni_{1/3}CO_{1/3}O₂, LiMn_{1/2}Ni_{1/2}O₂, LiFePO₄ and LiNiO₂. Examples of additional positive electrode active materials
-include metal oxides such as CuO, Cu₂O, MnO₂, MoO₃, V₂O₅, CrO₃, MₒO₃, Fe₂O₃, Ni₂O₃ and CoO₃; composite oxides of lithium and a transition metal, such as LiₓCoO₂, LiₓNiO₂ and LiₓMn₂O₄; metal chalcogenides such as TiS₂, MoS₂ and NbSe₃; and conductive polymer compounds such as polyacene, polyparaphenylene, polypyrrole and polyaniline.

Composite oxides of at least one selected from transition metals such as cobalt, nickel and manganese, and lithium, are generally said to be of high voltage type are preferred in the point that releasability of lithium ions and high voltage are easily obtained. Specific examples of the composite oxide of cobalt, nickel or manganese with lithium.include LiCoO₂, LiMnO₂, LiMn₂O₄, LiNiO₂, LiNiₓCO₍₁₋ₓ₎O₂ and LiMnₑNi_{b}Co_{c} O₂(a+b+c=1).

Furthermore, those lithium composite oxides maybe doped with a small amount of elements such as fluorine, boron, aluminum, chromium, zirconium, molybdenum and iron.

Furthermore, the surface of particles of lithium composite oxide maybe surface-treated with carbon, MgO, Al₂O₃, SiO₂ or the like.

The active material of the positive electrode of the present invention preferably includes lithium iron phosphate represented by LiₓFePO₄ (0<x≤1.2, generally 1), in addition to the above-described lithium and transition metal oxide.

Lithium iron phosphate has flat insertion and desorption potential of lithium in the vicinity of 3.1 to 3.5V/Li, and all of oxygen is bonded to phosphorus by a covalent bond to form a polyanion. Therefore, there is no case that oxygen in a positive electrode is released with the rise of temperature, thereby burning an electrolyte. For this reason, lithium iron phosphate is superior, in safety in a high temperature charging state to LiCoO₂ and the like. Furthermore, lithium iron phosphate has extremely excellent properties in chemical and mechanical stabilities, and is also excellent in long-term storage performance.

Those positive electrode active materials can be used as mixtures of two kinds or more thereof.

Active materials that allow the insertion and desorption of lithium ions are used as an active material of the negative electrode and include mesocarbon microbead (MCMB) and natural graphite.

Metal compounds and conductive polymer compounds used in the positive electrode can similarly be used as an additional active material. Additional materials include metal lithium; lithium alloys such as LiAl; carbon materials such as amorphous carbon, graphite ; surface-modified products of those carbon materials; tin oxide; and Si type negative electrode such as SiO₂, and examples of the carbon material include activated carbon, carbon fiber and carbon black. Above all, metal lithium, lithium alloy, carbon material and Si type negative electrode are particularly referred. Those active materials may be used as mixtures of two or more thereof..

Those negative electrode active materials select materials having oxidation-reduction potential nearly close to that of metal lithium, thereby high potential and high energy density of the present invention are realized. For this, the combination with the above positive electrode is important.

The positive electrode and the negative electrode use a conductive agent. Any conductive agent can be used so long as it is an electron conductive material which does not adversely affect battery performance. Carbon black such as acetylene black or Kitchen black is generally used, but conductive materials such as natural graphite (scaly graphite, scale graphite or earthy graphite), artificial graphite, carbon whisker, carbon fiber, metal (copper, nickel, aluminum, silver, gold or the like) powder, metal fiber and conductive ceramic material may be used. Those materials can be contained as mixtures of two or more thereof. The addition amount is preferably 1 to 30% by weight, and particularly preferably 2 to 20% by weight, based on the amount of the active material.

Any electron conductor may be used as a current collector of an electrode active material so long as it does not adversely affect in a battery constituted. For example, as a current collector for positive electrode, aluminum, titanium, stainless steel, nickel, baked carbon, conductive polymer, conductive glass and the like are used, and in addition to those, products obtained by treating the surface of aluminum, copper or the like with carbon, nickel, titanium, silver or the like for the purpose of improvement of adhesiveness, conductivity and oxidation resistance can also be used.

A current collector for the negative electrode can use copper, stainless steel, nickel, aluminum, titanium, baked carbon, conductive polymer, conductive glass, Al-Cd alloy and the like, and in addition to those, products obtained by treating the surface of copper or the like with carbon, nickel, titanium, silver or the like for the purpose of improvement of adhesiveness, conductivity and oxidation resistance can also be used.

The surface of those current collector materials can be oxidation treated. Regarding the shape of those, moldings of foil-like, film-like, sheet-like, net-like, punched or expanded product, lath type material, porous material, foamed material or the like are used. The thickness is not particularly limited, but a material having a thickness of 1 to 100 µm is used.

Examples of a binder which binds the above active material to the positive electrode and the negative electrode include polyvinylidene fluoride (PVDF); PVDF copolymer resins such as copolymers of PVDF with hexafluropropylene (HFP), perfluoromethyl vinyl ether (PFMV) or tetrafluoroethylene (TFE) ; fluorine resins such as polytetrafluoroethylene (PTFE) and fluorine rubber; styrene-butadiene rubber (SBR); ethylene-propylene rubber (EPDM); and polymers such as styrene-acrylonitrile copolymer. Polysaccharides such as carboxymethyl cellulose (CMC), thermoplastic resins such as polyimide resin, and the like can be used together. However, the invention is not limited to those embodiments. Furthermore, those materials may be used as mixtures of two or more thereof. The addition amount is preferably 1 to 30% by weight, and particularly preferably 2 to 20% by weight, based on the amount of the active material.

A porous film is used as the separator, and a microporous polymer film or a nonwoven fabric is generally preferably used. In particular, a porous film comprising a polyolefin polymer is preferred. Specific examples of the porous film include a microporous film of a polyethylene-made or polypropylene-made film, a multilayered film of porous polyethylene film and polypropylene, a nonwoven fabric comprising polyester fiber, aramide fiber, glass fiber or the like, and products of those having adhered on the surface thereof ceramic fine particles of silica, alumina, titania or the like.

The lithium secondary battery of the present invention uses a nonaqueous electrolyte comprising a nonflammable ionic liquid and a lithium salt, as a lithium ion-conductive electrolyte.

A solvent of the nonaqueous electrolyte uses an ionic liquid containing bis(fluorosulfonyl)imide anion (FSI anion) represented by the following formula (1) as an anionic component.

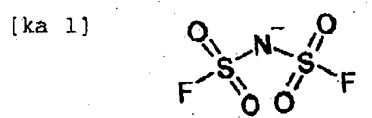

A method for preparing the FSI anion is not particularly limited, and the conventional methods such as a reaction between fluorosulfonic acid and urea can be used. FSI compounds obtained by those methods generally have low purity, and to obtain a preferred ionic liquid containing impurities of 10 ppm or less, the FSI compounds are appropriately purified with water, an organic solvent or the like, and used. Impurities can be confirmed by the analysis using a plasma emission spectrometer (ICP).

The anionic component contained in the ionic liquid may contain, for example, anions such as BF₄⁻, PF₆⁻, SbF₆⁻, NO₃⁻, CF₃SO₃⁻, (CF₃SO₂)₂N⁻ (called TFSI), (C₂F₅SO₂)₂N⁻, (CF₃SO₂)₃C⁻, CF₃CO₂⁻, C₃F₇CO₂⁻, CH₃CO₂⁻ and (CN)₂N⁻. Two or more of those anions may be contained.

The ionic liquid contained in the lithium secondary battery of the present invention does not particularly have limitation in a cation structure to be combined with the FSI anion. However, the combination with a cation which forms an ionic liquid having a melting point of 50°C or lower is preferred. Where the melting point exceeds 50°C, viscosity of the nonaqueous electrolyte is increased. As a result, the problem arises in cycle characteristic of a lithium secondary battery, and discharge capacity tends to be decreased, which are not preferred.

Examples of the cation include compounds containing any of N, P, S, O, C and Si, or at least two elements in the structure, and having a chain structure or a cyclic structure such as five-membered ring or six-membered ring in the skeleton.

Examples of the cyclic structure such as five-membered ring or six-membered ring include heteromonocyclic compounds such as furan, thiophene, pyrrole, pyridine, oxazole, isooxazole, thiazole, isothiazole, furazan, imidazole, pyrazole, pyrazine, pyrimidine, pyridazine, pyrrolidine or piperidine; and condensed heterocyclic compounds such as benzofuran, isobenzofuran, indole, isoindole, indolizine or carbazole.

Of those cations, chain or cyclic compounds containing a nitrogen element are particularly preferred in the points that those are industrially inexpensive and are chemically and electrochemically stable.

Preferred examples of the cation containing a nitrogen element include alkyl ammonium such as triethylammonium; imidazolium such as ethyl methyl imidazolium and butyl methyl imidazolium; pyrrolidinium such as 1-methyl-1-propyl pyrrolidinium; and piperidinium such as methyl propyl piperidinium.

In the present invention, the lithium salt dissolved in the ionic liquid as a supporting electrolyte of the non-aqueous electrolyte can use any lithium salt without particular limitation so long as it is a lithium salt generally used as an electrolyte for nonaqueous electrolyte.

Examples of the lithium salt include LiPF₆, LiBF₄, LiClO₄, LiAsF₆, LiCl, LiBr, LiCF₃SO₃, LiI, LiAlClO₄, LiC(CF₃SO₂)₃, LiN(C₂F₅SO₂)₂, LiBC₄O₈, LiFSI and LITFSI. Those lithium salts can be used by mixing two or more thereof.

Above all, LiFSI and LiTFSI are preferred.

It is desired that such a lithium salt is contained in the ionic liquid in a concentration of generally 0.1 to 2.0 mol/liter, and preferably 0.3 to 1.0 mol/liter.

Furthermore, it is desired that the amount of halogen ions contained as an impurity in the nonaqueous electrolyte used in the lithium secondary battery of the present invention is 10 ppm or less. Other impurities include alkali metal ions and alkaline earth metal ions, and it is preferred that the total amount of those impurities is 10 ppm or less. Where those impurities are contained in a large amount, it adversely affects cycle characteristic of a lithium secondary battery, and life as a secondary battery is shortened.

The lithium secondary battery of the present invention can be formed into cylindrical form, coin form, square form or other optional form. The basic constitution of a battery is the same, regardless of a form, and design can be changed depending on the purpose.

The lithium secondary battery according to the present invention can be obtained by, for example, in the case of a cylindrical form, winding a negative electrode obtained by applying a negative electrode active material to a negative electrode current collector, and a positive electrode obtained by applying a positive electrode active material to a positive electrode current collector through a separator, placing the resulting wound body in a battery can, pouring a nonaqueous electrolyte, and sealing in a state of arranging an insulating plate up and down.

In the case of applying to a coin-type lithium secondary battery, a disc-shaped negative electrode, a separator, a disc-shaped positive electrode and a stainless steel plate are placed in a coin-like battery can in a laminated state, a nonaqueous electrolyte is poured, and the can is sealed.

### Examples

The present invention is described in more detail by reference to the following Examples and Comparative Examples, but the invention is not limited by those.

A lithium secondary battery of each of Examples and Comparative Examples was prepared. Preparation of a positive electrode and a negative electrode, and preparation method of a battery are described below. Materials used are as follows.

### [Material used]

Conductive agent, acetylene black: a product of Denki Kagaku Kogyo Kabushiki Kaisha, DENKA BLACK
Conductive agent, Kitchen black: a product of Kitchen Black International, KITCHEN BLACK EC300J
Negative electrode active material, MCMB: a product of Osaka Gas Chemicals Co., Ltd., MCMB 25-28
Binder, PVDF: a product of Kureha Co., Ltd., KF BINDER
Binder, SBR: a product of Nippon Zeon Co., Ltd., BM-400M
Binder, CMC/3H: a product of Daiichi Kogyo Seiyaku Co., Ltd., CELLOGEN-3H
Binder, CMC/4H: a product of Daiichi Kogyo Seiyaku Co., Ltd., CELLOGEN-4H
Binder, CMC/WSC: a product of Daiichi Kogyo Seiyaku Co., Ltd., CELLOGEN WS-C

### <Example 1>

### [Preparation of positive electrode]

100 g of LiMn₂O₄ as a positive electrode active material, 5 g of acetylene black as a conductive agent, 6 g of PVDF as a binder and 97.5 g of N-methyl-2-pyrrolidone (NMP) as a dispersion medium were mixed with a planetary mixer to prepare a positive electrode coating liquid having a solid content (components excluding NMP) of 53.2%. This coating liquid was applied onto an aluminum foil having a thickness of 20 µm with a coater, and dried at 130°C, followed by conducting roll press treatment, thereby obtaining an electrode having a positive electrode active material weight of 16 mg/cm².

### [Preparation of negative electrode]

100 g of MCMB as a negative electrode active material, 10 g of acetylene black as a conductive agent, 5 g of PVDF as a binder and 107.5 g of NMP as a dispersion medium were mixed with a planetary mixer to prepare a negative electrode coating liquid having a solid content (components excluding NMP) of 50%. This coating liquid was applied onto a copper foil having a thickness of 10 µm with a coater, and dried at 130°C, followed by conducting roll press treatment, thereby obtaining an electrode having a negative electrode active material weight of 7 mg/cm².

### [Preparation of lithium secondary battery]

A lithium secondary battery having a positive electrode area of 4 cm² and a negative electrode area of 4.41 cm² was prepared using the positive electrode and the negative electrode obtained above, and a polypropylene separator. A solution prepared by dissolving 0.8 mol of lithium salt LiFSI in ethyl methyl imidazolium/FSI solvent, as an electrolyte was poured. After pouring, the inlet was sealed to prepare a battery.

### <Example 2>

### (Preparation of positive electrode)

100 g of LiMn_{1/3}Ni_{1/3}Co_{1/3}O₂ as a positive electrode active material, 7 g of acetylene black as a conductive agent, 4 g of PVDF as a binder and 95 g of NMP as a dispersion medium were mixed with a planetary mixer to prepare a positive electrode coating liquid having a solid content (components excluding NMP) of 53.9%. This coating liquid was applied onto an aluminum foil having a thickness of 20 µm with a coater, and dried at 130°C, followed by conducting roll press treatment, thereby obtaining an electrode having a positive electrode active material weight of 16 mg/cm².

### [Preparation of negative electrode]

100 g of MCMB as a negative electrode active material, 2 g of acetylene black as a conductive agent, 4 g of PVDF as a binder and 90 g of NMP as a dispersion medium were mixed with a planetary mixer to prepare a negative electrode coating liquid having a solid content (components excluding NMP) of 54%. This coating liquid was applied onto a copper foil having a thickness of 10 µm with a coater, and dried at 130°C, followed by conducting roll press treatment, thereby obtaining an electrode having a negative electrode active material weight of 7.5 mg/cm².

### [Preparation of lithium secondary battery]

According to the method of Example 1, a battery was prepared using a solution obtained by dissolving 0.6 mol of lithium salt LiFSI in butyl methyl imidazolium/FSI solvent, as an electrolyte.

### <Example 3>

### [Preparation of positive electrode]

100 g of LiMn_{1/2}Ni_{1/2}O₂ as a positive electrode active material, 3 g of Kitchen black as a conductive agent, 3 g of PVDF as a binder and 90 g of NMP as a dispersion medium were mixed with a planetary mixer to prepare a positive electrode coating liquid having a solid content (components excluding NMP) of 54.1%. This coating liquid was applied onto an aluminum foil having a thickness of 20 µm with a coater, and dried at 130°C, followed by conducting roll press treatment, thereby obtaining an electrode having a positive electrode active material weight of 15 mg/cm².

### [Preparation of negative electrode]

A mixture of 100 g of MCMB as a negative electrode active material, 1 g of acetylene black as a conductive agent, 2 g of SBR as a binder and 1 g of CMC/4H as a thickener, and 89 g of water as a dispersion medium were mixed with a planetary mixer to prepare a negative electrode coating liquid having a solid content of 53.6%. This coating liquid was applied onto a copper foil having a thickness of 10 µm with a coater, and dried at 80°C, followed by conducting roll press treatment, thereby obtaining an electrode having a negative electrode active material weight of 6 mg/cm².

### [Preparation of lithium secondary battery]

According to the method of Example 1, a battery was prepared using a solution obtained by dissolving 0.5 mol of lithium salt LiFSI in 1-methyl-1-propyl pyrrolidinium/FSI solvent, as an electrolyte.

### <Example 4>

### [Preparation of positive electrode]

100 g of LiFePO₄. (covered with carbon in an amount of 5% based on the weight of LiFePO₄) as a positive electrode active material, 3 g of acetylene black as a conductive agent, 5 g of PVDF as a binder and 120 g of NMP as a dispersion medium were mixed with a planetary mixer to prepare a positive electrode coating liquid having a solid content (components excluding NMP) of 47.4%. This coating liquid was applied onto an aluminum foil having a thickness of 20 µm with a coater, and.dried at 130°C, followed by conducting roll press treatment, thereby obtaining an electrode having a positive electrode active material weight of 12 mg/cm².

### [Preparation of negative electrode]

A mixture of 100 g of natural graphite as a negative electrode active material, 2 g of acetylene black as a conductive agent, 2 g of SBR as a binder and 2 g of CMC/3H as a thickener, and 88 g of water as a dispersion medium were mixed with a planetary mixer to prepare a negative electrode coating liquid having a solid content of 53.6%. This coating liquid was applied onto a copper foil having a thickness of 10 µm with a coater, and dried at 80°C, followed by conducting roll press treatment, thereby obtaining an electrode having a negative electrode active material weight of 5 mg/cm².

### [Preparation of lithium secondary battery]

According to the method of Example 1, a battery was prepared using a solution obtained by dissolving 0.6 mol of lithium salt LiTFSI in ethyl methyl imidazolium/FSI solvent, as an electrolyte..

### <Example 5>

### [Preparation of positive electrode]

A mixture of 100 g of LiFePO₄ (covered with carbon in an amount of 3% based on the weight of LiFePO₄) as a positive electrode active material, 8 g of acetylene black as a conductive agent, 3 g of SBR as a binder and 2 g of CMC/3H as a thickener, and 114.5 g of water as a dispersion medium were mixed with a planetary mixer to prepare a positive electrode coating liquid having a solid content of 49.2%. This coating liquid was applied onto an aluminum foil having a thickness of 20 µm with a coater, and dried at 130°C, followed by conducting roll press treatment, thereby obtaining an electrode having a positive electrode active material weight of 10 mg/cm².

### [Preparation of lithium secondary battery]

The positive electrode obtained and a metal lithium foil having a thickness of 200 µm as a negative electrode were used, and according to the method of Example 1, a battery was prepared using a solution obtained by dissolving 0.8 mol of lithium salt LiFSI in methyl propyl piperidinium/FSI:butyl methyl imidazolium/FSI (=5:5 vol) solvent, as an electrolyte.

### <Comparative Example 6>

### [Preparation of positive electrode]

100 g of LiCoO₂ as a positive electrode active material, 5 g of acetylene black as a conductive agent, 5 g of PVDF as a binder and 93 g of NMP as a dispersion medium were mixed with a planetary mixer to prepare a positive electrode coating liquid having a solid content (components excluding NMP) of 54.2%. This coating liquid was applied onto an aluminum foil having a thickness of 20 µm with a coater, and dried at 130°C, followed by conducting roll press treatment, thereby obtaining an electrode having a positive electrode active material weight of 16 mg/cm².

### [Preparation of negative electrode]

A mixture of 100 g of a surface-covered product of natural graphite as a negative electrode active material, 1 g of acetylene black as a conductive agent, 6 g of SBR as a binder and 4 g of CMC/3H as a thickener, and 90.8 g of water as a dispersion medium were mixed with a planetary mixer to prepare a negative electrode coating liquid having a solid content of 55%. This coating liquid was applied onto a copper foil having a thickness of 10 µm with a coater, and dried at 130°C, followed by conducting roll press treatment, thereby obtaining an electrode having a negative electrode active material weight of 9 mg/cm².

### [Preparation of lithium secondary battery]

According to the method of Example 1, a battery was prepared using a solution obtained by dissolving 0.7 mol of lithium salt LiTFSI in ethyl methyl imidazolium/FSI:tetraethyl ammonium/FSI (=9.5:0.5 vol) solvent, as an electrolyte.

### <Example 7>

### [Preparation of positive electrode]

100 g of LiNiO₂ as a positive electrode active material, 5 g of acetylene black as a conductive agent, 5 g of PVDF as a binder and 85 g of NMP as a dispersion medium were mixed with a planetary mixer to prepare a positive electrode coating liquid having a solid content (components excluding NMP) of 56.4%. This coating liquid was applied onto an aluminum foil having a thickness of 20 µm with a coater, and dried at 130°C, followed by conducting roll press treatment, thereby obtaining an electrode having a positive electrode active material weight of 16 mg/cm².

### [Preparation of negative electrode]

A mixture of 100 g of MCMB as a negative electrode'active material, 3 g of acetylene black as a conductive agent, 7 g of SBR as a binder and 2 g of CMC/WSC as a thickener, and 54.6 g of water as a dispersion medium were mixed with a planetary mixer to prepare a negative electrode coating liquid having a solid content of 54.6%. This coating liquid was applied onto a copper foil having a thickness of 10 µm with a coater, and dried at 130°C, followed by conducting roll press treatment, thereby obtaining an electrode having a negative electrode active material weight of 12 mg/cm².

### [Preparation of lithium secondary battery]

According to the method of Example 1, a battery was prepared using a solution obtained by dissolving 0.6 mol of lithium salt LiFSI in ethyl methyl imidazolium/FSI solvent, as an electrolyte.

### <Comparative Example 8>

### [Preparation of positive electrode]

100 g of LiCoO₂ as a positive electrode active material, 5 g of acetylene black as a conductive agent, 5 g of PVDF as a binder and 90 g of NMP as a dispersion medium were mixed with a planetary mixer to prepare a positive electrode coating liquid having a solid content (components excluding NMP) of 55%. This coating liquid was applied onto an aluminum foil having a thickness of 20 µm with a coater, and dried at 130°C, followed by conducting roll press treatment, thereby obtaining an electrode having a positive electrode active material weight of 15 mg/cm².

### [Preparation of negative electrode]

100 g of MCMB as a negative electrode active material, 3 g of acetylene black as a conductive agent, 4 g of PVDF as a binder, and 87.5 g of NMP as a dispersion medium were mixed with a planetary mixer to prepare a negative electrode coating liquid having a solid content (components excluding NMP) of 55%. This coating liquid was applied onto a copper foil having a thickness of 10 µm with a coater, and dried at 130°C, followed by conducting roll press treatment, thereby obtaining an electrode having a negative electrode active material weight of 8 mg/cm².

### [Preparation of lithium secondary battery]

According to the method of Example 1, a battery was prepared using a solution obtained by dissolving 0.5 mol of lithium salt LiFSI in ethyl methyl imidazolium/FSI solvent, as an electrolyte.

### <Comparative Example 1>

### [Preparation of positive electrode]

100 g of LiCoO₂ as a positive electrode active material, 5 g of acetylene black as a conductive agent, 5 g of PVDF as a binder and 80 g of NMP as a dispersion medium were mixed with a planetary mixer to prepare a positive electrode coating liquid having a solid content (components excluding NMP) of 57.9%. This coating liquid was applied onto an aluminum foil having a thickness of 20 µm with a coater, and dried at 130°C, followed by conducting roll press treatment, thereby obtaining an electrode having a positive electrode active material weight of 15 mg/cm².

### [Preparation of negative electrode]

100 g of MCMB as a negative electrode active material, 2 g of acetylene black as a conductive agent, 8 g of PVDF as a binder, and 95 g of NMP as a dispersion medium were mixed with a planetary mixer to prepare a negative electrode coating liquid having a solid content (components excluding NMP) of 53.7%. This coating liquid was applied onto a copper foil having a thickness of 10 µm with a coater, and dried at 130°C, followed by conducting roll press treatment, thereby obtaining an electrode having a negative electrode active material weight of 8 mg/cm².

### [Preparation of lithium secondary battery]

According to the method of Example 1, a battery was prepared using a solution obtained by dissolving 0.5 mol of lithium salt LiTFSI in 1-methyl-1-propyl pyrrolidinium/TFSI solvent, as an electrolyte.

### <Comparative Example 2>

### [Preparation of positive electrode]

100 g of LiCoO₂ as a positive electrode active material, 5 g of acetylene black as a conductive agent, 5 g of PVDF as a binder and 90 g of NMP as a dispersion medium were mixed with a planetary mixer to prepare a positive electrode coating liquid having a solid content (components excluding NMP) of 55%. This coating liquid was applied onto an aluminum foil having a thickness of 20 µm with a coater, and dried at 130°C, followed by conducting roll press treatment, thereby obtaining an electrode having a positive electrode active material weight of 15 mg/cm².

### [Preparation of negative electrode]

100 g of Li₄Ti₅O₁₂ as a negative electrode active material, 5 g of acetylene black as a conductive agent, 5 g of PVDF as a binder, and 100 g of NMP as a dispersion medium were mixed with a planetary mixer to prepare a negative electrode coating liquid having a solid content (components excluding NMP) of 52.4%. This coating liquid was applied onto a copper foil having a thickness of 10 µm with a coater, and dried at 130°C, followed by conducting roll press treatment, thereby obtaining an electrode having a negative electrode active material weight of 8 mg/cm².

### [Preparation of lithium secondary battery]

According to the method of Example 1, a battery was prepared using a solution obtained by dissolving 0.5 mol of lithium salt LiFSI in ethyl methyl imidazolium/FSI solvent, as an electrolyte.

### <Comparative Example 3>

### [Preparation of positive electrode]

100 g of LiCoO₂ as a positive electrode active material, 5 g of acetylene black as a conductive agent, 5 g of PVDF as a binder and 80 g of NMP as a dispersion medium were mixed with a planetary mixer to prepare a positive electrode coating liquid having a solid content (components excluding NMP) of 57.9%. This coating liquid was applied onto an aluminum foil having a thickness of 20 µm with a coater, and dried at 130°C, followed by conducting roll press treatment, thereby obtaining an electrode having a positive electrode active material weight of 15 mg/cm².

### [Preparation of negative electrode]

100 g of MCMB as a negative electrode active material, 2 g of acetylene black as a conductive agent, 4 g of PVDF as a binder, and 95 g of NMP as a dispersion medium were mixed with a planetary mixer to prepare a negative electrode coating liquid having a solid content (components excluding NMP) of 52.7%. This coating liquid was applied onto a copper foil having a thickness of 10 µm with a coater, and dried at 130°C, followed by conducting roll press treatment, thereby obtaining an electrode having a negative electrode active material weight of 8 mg/cm².

### [Preparation of lithium secondary battery]

According to the method of Example 1, a battery was prepared using a solution obtained by dissolving 0.5 mol of lithium salt LiTFSI in 1-methyl-1-prvpyl pyrrolidinium/TFSI solvent, as an electrolyte.

Na ion and Cl ion concentrations in the electrolyte used in Examples and Comparative Examples are shown in Table 1.

**[Table 1]**

| | Na ion concentration ppm | Cl ion concentration ppm |
|---|---|---|
| Example 1 | 5 | 1 |
| Example 2 | 2 | 2 |
| Example 3 | 3 | 2 |
| Example 4 | 2 | 1 |
| Example 5 | 2 | 3 |
| Example 6 | 5 | 1 |
| Example 7 | 2 | 1 |
| Example 8 | 2 | 1 |
| Comparative Example 1 | 2 | 5 |
| Comparative Example 2 | 2 | 4 |
| Comparative Example 3 | 2 | 50 |

The lithium secondary batteries prepared were subjected to performance test at 20°C. The evaluation method is as follows. The results are shown in Table 2.

### [Performance test]

Using a charge and discharge test device, battery performance and discharge average voltage were confirmed under the conditions of 0.5-hour rate charge and 1-hour rate discharge. Furthermore, cycle characteristic test of 200 cycles was conducted under the conditions of 1-hour rate charge and 1-hour rate discharge, and cycle number when capacity is decreased to 80% of the first discharge capacity in the cycle test was confirmed. The cycle test results shown in Table 2 are based on the first discharge capacity per positive electrode active material.

**[Table 2]**

| | Voltage when full charge V | Discharge average voltage V | Battery performance mAh | Discharge capacity per positive electrode active material in 1-hour rate mAh/g | Cycles when capacity retention is 80% |
|---|---|---|---|---|---|
| Example 1 | 4.3 | 3.8 | 7.3 | 104 | 200 or more |
| Example 2 | 4.3 | 3.8 | 7.6 | 108 | 200 or more |
| Example 3 | 4.2 | 3.6 | 6.3 | 96 | 200 or more |
| Example 4 | 4.0 | 3.0 | 6.8 | 128 | 186 |
| Example 5 | 4.0 | 3.0 | 4.7 | 112 | 200 or more |
| Comparative Example 6 | 4.2 | 3.6 | 7.7 | 109 | 170 |
| Example 7 | 4.2 | 3.5 | 10.8 | 154 | 200 or more |
| Comparative Example 8 | 4.2 | 3.6 | 6.3 | 96 | 200 or more |
| Comparative Example 1 | 4.2 | 3.6 | 5.9 | 88 | 49 |
| Comparative Example 2 | 2.3 | 1.7 | 8.4 | 128 | 200 or more |
| Comparative Example 3 | 4.2 | 3.6 | 3.3 | 50 | 0 |

As shown in Table 1 and Table 2, it is seen that the lithium secondary battery according to the present invention is that charge voltage of the positive electrode is high voltage of 4V or higher, and battery performance, discharge capacity and cycle characteristic are all excellent. Contrary to this, Comparative Example 1 using TFSI as an electrolyte is very poor in cycle characteristic. Comparative Example 2 using Li₄Ti₅O₁₂ as a negative electrode active material is that charge voltage and discharge average voltage are low, and high voltage is not obtained. Comparative Example 3 using 1-methyl-1-propyl pyrrolidinium/TFSI as a solvent of an electrolyte is that Cl ion concentration in the electrolyte is 50. ppm and abnormally high, and it is seen that cycle characteristic is not obtained due to impurities.

### Industrial Applicability

The lithium secondary battery using an ionic liquid according to the present invention can form into optional shape of a cylindrical shape, a coin shape, a square shape or the like, and can be used as power source in mobile device terminals of mobile phones, notebook computers, digital cameras, camera integrated VTR, MD players and the like; and portable electronic equipments such as laptop computers. Furthermore, development of use in various fields of power source mounted on transport machines such as electric vehicles, power storage, and the like.

## Claims

1. A lithium secondary battery using an ionic liquid, comprising a positive electrode, a negative electrode, a separator provided between the positive electrode and the negative electrode, and a nonaqueous electrolyte containing a lithium salt, wherein the nonaqueous electrolyte uses an ionic liquid containing bis(fluorosulfonyl)imide anion as an anionic component, as a solvent, **characterised in that**
the positive electrode comprises one or more active materials selected from LiMn₂O₄, LiMn_{1/3}Ni_{1/3}Co_{1/3}O₂, LiMn_{1/2}Ni_{1/2}O₂, LiFePO₄ and LiNiO₂;
the negative electrode comprises an active material selected from mesocarbon microbead and natural graphite; and
the amount of halogen ions contained in the nonaqueous electrolyte is 10 ppm or lower.

2. The lithium secondary battery using an ionic liquid as claimed in claim 1, wherein the ionic liquid contains a cation containing a nitrogen atom as a cationic component.

3. The lithium secondary battery using an ionic liquid as claimed in claim 2, wherein the cation containing a nitrogen atom is alkyl ammonium, imidazolium, pyrrolidinium or piperidinium.

## Patentansprüche

1. Lithium-Sekundärbatterie, die eine ionische Flüssigkeit verwendet, umfassend eine positive Elektrode, eine negative Elektrode, einen zwischen der positiven Elektrode und der negativen Elektrode vorgesehenen Separator und einen nicht wässrigen Elektrolyten, der ein Lithiumsalz enthält, wobei der nicht wässrige Elektrolyt eine Bis(fluorosulfonyl)imid-Anion als eine anionische Komponente enthaltende ionische Flüssigkeit als ein Lösungsmittel verwendet, **dadurch gekennzeichnet, dass**
die positive Elektrode einen oder mehrere aus LiMn₂O₄, LiMn_{1/3}Ni_{1/3}Co_{1/3}O₂, LiMn_{1/2}Ni_{1/2}O₂, LiFePO₄ und LiNiO₂ ausgewählte aktive Stoffe enthält;
die negative Elektrode einen aus Mesokohlenstoff-Mikroperlen und Naturgraphit ausgewählten aktiven Stoff enthält;
die Menge an in dem nicht wässrigen Elektrolyten enthaltenen Halogenionen 10 ppm oder weniger beträgt.

2. Lithium-Sekundärbatterie, die eine ionische Flüssigkeit verwendet, nach Anspruch 1, wobei die ionische Flüssigkeit ein ein Stickstoffatom enthaltendes Kation als eine kationische Komponente enthält.

3. Lithium-Sekundärbatterie, die eine ionische Flüssigkeit verwendet, nach Anspruch 2, wobei es sich bei dem ein Stickstoffatom enthaltenden Kation um Alkylammonium, Imidazolium, Pyrrolidinium oder Piperidinium handelt.

## Revendications

1. Batterie secondaire au lithium utilisant un liquide ionique, comprenant une électrode positive, une électrode négative, un séparateur fourni entre l'électrode positive et l'électrode négative, et un électrolyte non aqueux contenant un sel de lithium, dans laquelle l'électrolyte non aqueux utilise un liquide ionique contenant un anion bis(fluorosulfonyl)imide comme composant anionique, comme solvant, **caractérisée en ce que**
l'électrode positive comprend un ou plusieurs matériaux actifs sélectionnés parmi LiMn₂O₄, LiMn_{1/3}Ni_{1/3}Co_{1/3}O₂, LiMn_{1/2}Ni_{1/2}O₂, LiFePO₄ et LiNiO₂ ;
l'électrode négative comprend un matériau actif sélectionné parmi une microbille de mésocarbone et le graphique naturel ; et
la quantité d'ions d'halogène contenue dans l'électrolyte non aqueux est de 10 ppm ou moins.

2. Batterie secondaire au lithium utilisant un liquide ionique selon la revendication 1, dans laquelle le liquide ionique contient un cation contenant un atome d'azote comme composant cationique.

3. Batterie secondaire au lithium utilisant un liquide ionique selon la revendication 2, dans laquelle le cation contenant un atome d'azote est un ammonium d'alkyle, imidazolium, pyrrolidinium ou piperidinium.
